# EUROPEAN PATENT SPECIFICATION

(11) **EP 1 017 471 B1**
(45) Date of publication and mention of the grant of the patent: **20.11.2002**
(21) Application number: 98944206.6
(22) Date of filing: 03.09.1998
(51) Int. Cl.: B01D 33/073, B01D 33/11, B01D 33/50, B01D 33/46

(54) **AN APPARATUS FOR SCREENING AND COMPACTING**
VORRICHTUNG ZUM SIEBEN UND KOMPAKTIEREN
APPAREIL POUR CRIBLAGE ET COMPACTAGE

(30) Priority: 17.09.1997 IT RM970556
(43) Date of publication of application: 12.07.2000
(73) Proprietor: Idracos S.P.A., 43100 Parma (IT)
(72) Inventor: CURINI, Simona, I-02100 Rieti (IT)
(74) Representative: Gotra, Stefano
(86) International application number: IT9800239
(87) International publication number: WO99013959

(56) References cited:
- EP-A- 0 738 531
- WO-A-96/30102
- DE-C- 673 463
- DE-U- 1 943 932
- US-A- 2 444 563

## Description

### Technical Field

The apparatus of the invention is applicable to the field of separation of liquids from solids.

### Background Art

For more than 20 years screening apparatus for separation of liquids from solids including a revolving screen have been available on the market. The solid is separated on the outer surface of the revolving screen, and the liquid, falling through the screen, acts as a pre-cleaner of the screen itself. The screen is then further cleaned by a scraper or doctor which removes the residues of the solid which have remained on the surface of the screen.

The screen is powered by an electric motor or the like, and the liquid with the solids included is supplied to the screen by force of gravity or by pumping. The screened liquid is discharged by force of gravity.

The separation is done at atmospheric pressure and in ambient conditions, and the separated solids are collected downstream of the screen and removed in any way considered appropriate.

This type of separator is applied in a large number of sectors, especially in industry, and for the most varied operations.

For example, in the food conserves industry water has to be separated from tomato skins, but a plant of this type, of appropriate dimensions, could be used for any application where it is necessary to separate liquids from solids.

Though these machines have been present in the art for many years, they exhibit some drawbacks which, if obviated, would render considerable advantages in terms of energy saving, performance and production, as well as in terms of simplification of the plants themselves.

The above refers especially to the fact that the solids are simply separated from the liquid, without any compaction of the solids being performed, so that the mass thereof remains considerable; also, after screening, the liquid has to be repumped.

Also, prior art apparatus require a structure for removal of the separated solids, which are simply fed into a container.

In the light of the above, it is obvious that it would be advantageous to have an apparatus which not only separated the solid from the liquid but also compacted the products and removed them from the separator.

DE 673 463 discloses a screening and compacting apparatus as in the preamble of claim 1, comprising a revolving screening cylinder contained inside a closed container suitable for operation under pressure, means located externally of the revolving screening cylinder in form of an endless screw for extracting the solids or sludge. Inlet for mixture and outlet for liquid are not mentioned explicitly, but these parts are the usual structural connections of any such apparatus.

DE 1 943 932 discloses an apparatus for screening and compacting comprising an inlet for mixture, an oulet for liquid, a screen drum, a closed container, means for pressurizing the container and means for extracting and further compacting the solids or sludge.

WO 96/30102 discloses an apparatus for screening and compacting comprising a rotatable drum screen contained inside a closed container, an endless screw for discharging the screened solids located internally of the revolving screening cylinder, a compacting device provided with a flap lid, an inlet for the mixture and an outlet for filtered liquid.

US 2,444,563 discloses an apparatus for screening and compacting a hot slack-wax slurry fed into an elongated annular space inside a closed, outer cylindrical body surrounding a cylindrical rotating filter element, at a pressure causing the wax particles to agglomerate. The agglomerated particles are conveyed by means of an helical blade to a discharge opening which provides a restriction suitable to progressively compact the particles by the created pressure. The helical blade is located outside the revolving filter element and is solidly and coaxially connetted thereto.

One aim of the invention is to provide an apparatus that enables the solid separated from the liquid to be automatically compacted.

Another aim of the present invention is to provide an apparatus which removes the solids after said separation.

A still further aim of the present invention is to provide an apparatus which does not need a motor to power the revolving screen.

A yet further aim of the invention is to provide an apparatus which can be set in line on a pipeline of a production process with no need of further lifting.

The specific object of the present invention concerns an apparatus for screening and compacting, comprising an inlet for a liquid-solid and/or sludge consistency mixture, an outlet for the liquid after screening, a revolving screen cylinder housed internally of a closed container, said mixture inlet and liquid outlet being coupled to said container. The liquid-solid and/or sludge consistency mixture is introduced into the container at a higher than atmospheric pressure, and the solids and/or sludge separated from the liquid are pressure-compacted. Means for extracting the compacted solids and sludge are provided.

The means for extracting the solids and/or sludge are located externally of said revolving screening cylinder.

The means for extraction can be provided with an automatically-opening outlet valve working in combination with the pressure of the outletting compacted solids and/or sludge.

Preferably the means for extracting the compacted solids and/or sludge can be constituted by an endless screw or a conveyor belt, and can be arranged parallel or inclined with respect to the axis of the revolving screening cylinder.

The apparatus of the invention can be provided with a fixed washing nozzle working at a pressure comprised between 1 and 200 bar.

Further, cleaning blades can be provided to scrape the revolving cylinder.

The revolving screening cylinder can be coaxial to the container, or offset with respect thereto.

A conduit can be provided between the mixture inlet and the compacted solid and/or sludge substance outlet.

The revolving cylinder can be powered by a motor or by a hydrodynamic turbine. In a preferred embodiment of the invention the container thereof can be pressurised with compressed air and a sensor for reading off the level of the liquid internally of the container.

The revolving screening cylinder can be made using a continuous helically-or longitudinally-wound trapezoid wire, or alternatively can be made of sheet steel with microperforations.

The apparatus of the invention can be used horizontally or vertically.

### Disclosure of Invention

Further characteristics and advantages of the present invention will better emerge from the detailed description that follows of some preferred but non-exclusive embodiments of the invention, illustrated purely by way of non-limiting examples in the accompanying figures of the drawings, in which:
figure 1 is a side view of a first embodiment of the invention;
figure 2 is a front view of the apparatus of figure 1;
figure 3 is a functional diagram of the apparatus of figure 1;
figure 4 is a perspective view of a second embodiment of the apparatus of the invention;
figure 5 is a front view of the apparatus of figure 4;
figure 6 shows a section of a third embodiment of the apparatus of the invention;
figure 7 is a front view of the apparatus of figure 6;
figure 8 is a side view of a fourth embodiment of the invention; and
figure 9 is a view of the apparatus of the invention arranged in a channel.

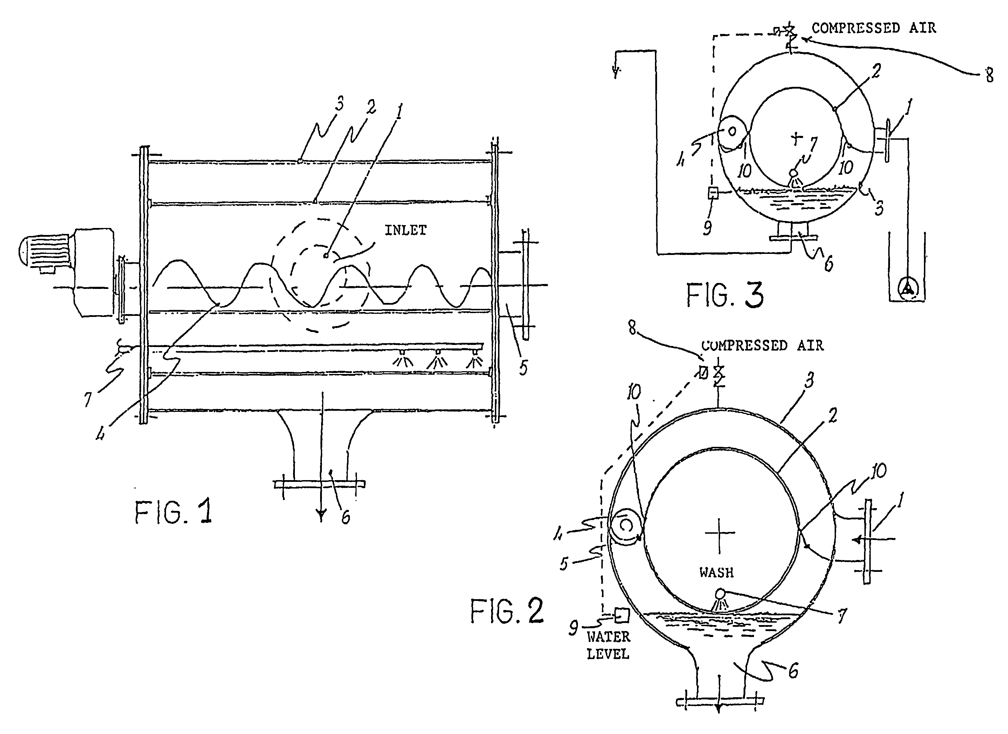

Figures 1 to 3 show a first embodiment of the apparatus of the invention, including a pressurised inlet conduit 1 for the liquids containing the solids, feeding the mixture to be separated to the revolving screen 2, which can be of any type and which is contained internally of a closed container 3.

On the opposite side of the screen 2 with respect to the inlet side an endless screw 4 is located, the task of which is to push the solids once separated towards the outlet through an outlet conduit 5, outlet of the solids being possible in either direction, according to the rotation direction of the screw 4.

The solids separated from the liquid undergo a first compression due to the fact that they are already under pressure from inlet, and are further compacted by the action of the endless screw 4, which removes them continually from the screen zone.

The separated liquid outlets through conduit 6. Figure 2 shows a fixed nozzle 7 for cleaning off the revolving screen 2.

The apparatus of the invention includes a compressed air plant 8 for injecting compressed air internally of the container 3, which plant 8 is provided with a pressure sensor 9 to keep the pressurisation level inside the container 3 at a predetermined constant level and thus keep the solid compacting zone dry.

The liquids which have been separated from the solids therefore outlet from the pressurised conduit 6 and can be returned to circulation without any need for further pumping systems.

10 denotes the blades for cleaning the cylinder or revolving screen 2.

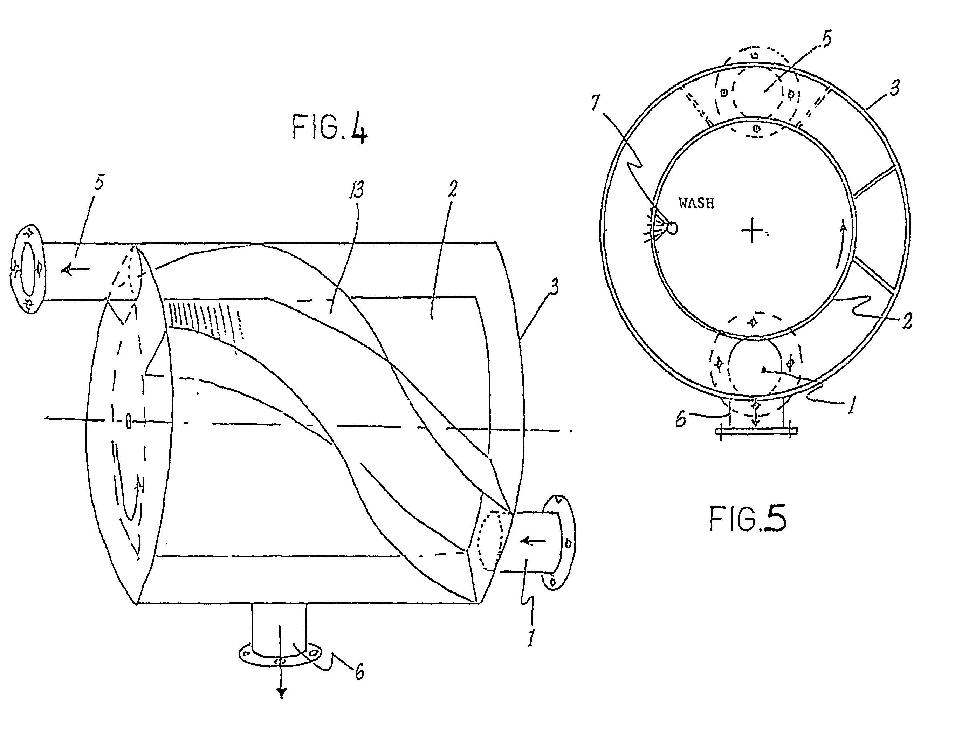

In the embodiment of figures 4 and 5, the compaction and extraction of the separated solids occurs in the channel 13 realised externally of the revolving screen 2 between the inlet 1 of the pressurised mixture and the outlet of the separated and compacted solids.

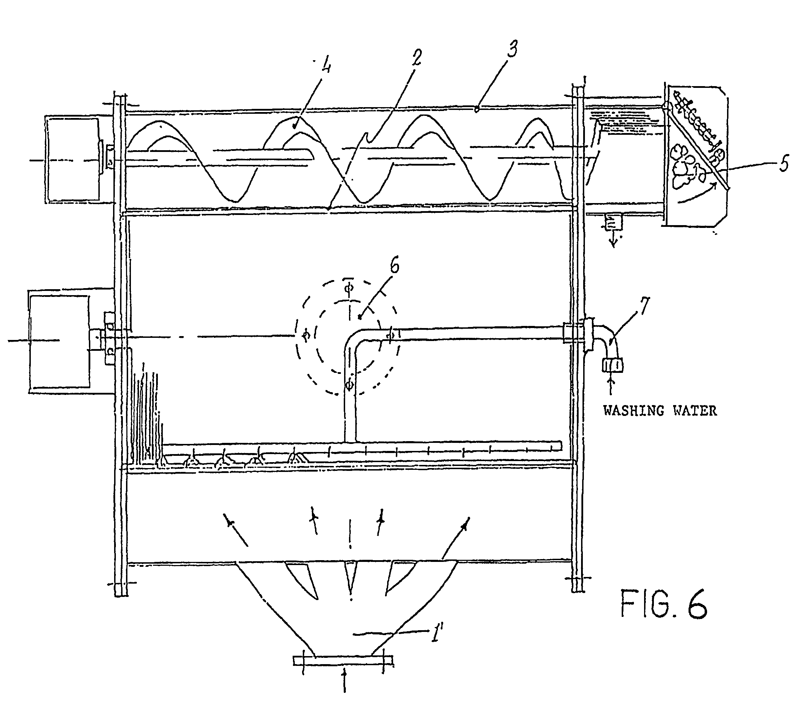

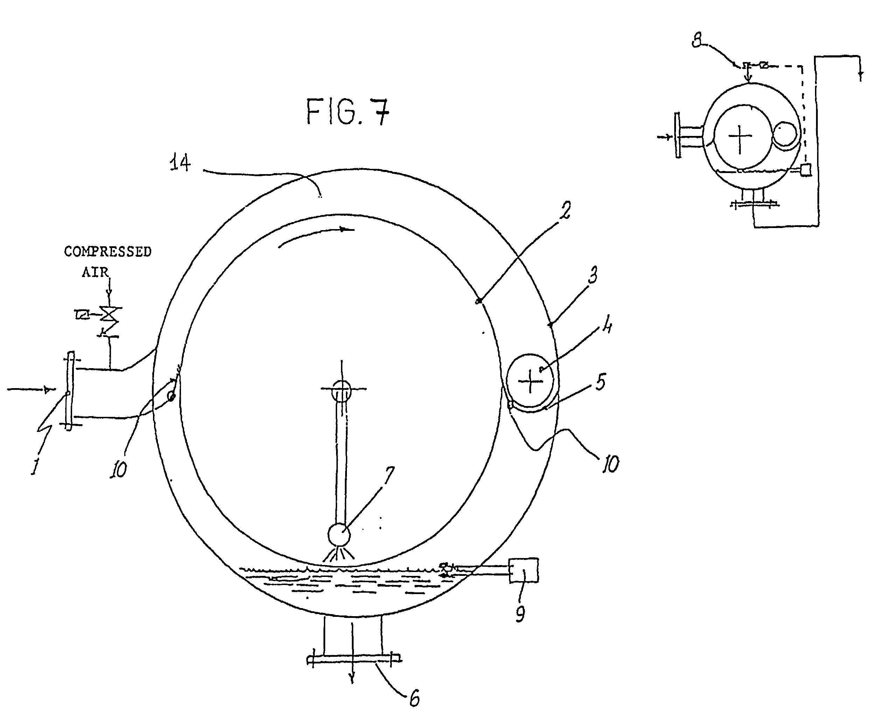

Figures 6 and 7 show a still further embodiment of the invention.

The inlet of the liquid-solid mixture is subdivided into a plurality of conduits 1', so as to have an optimal distribution of the mixture over the revolving screen 2.

The screen 2 is offset with respect to the container 3, such as to compact the solids in the chamber 14 before they arrive at the endless screw 4.

In this embodiment, too, a nozzle 7 for cleaning the revolving screen is provided, as is the air pressurisation system 8 internally of the container 4 and relative sensor 9, though they could also be omitted.

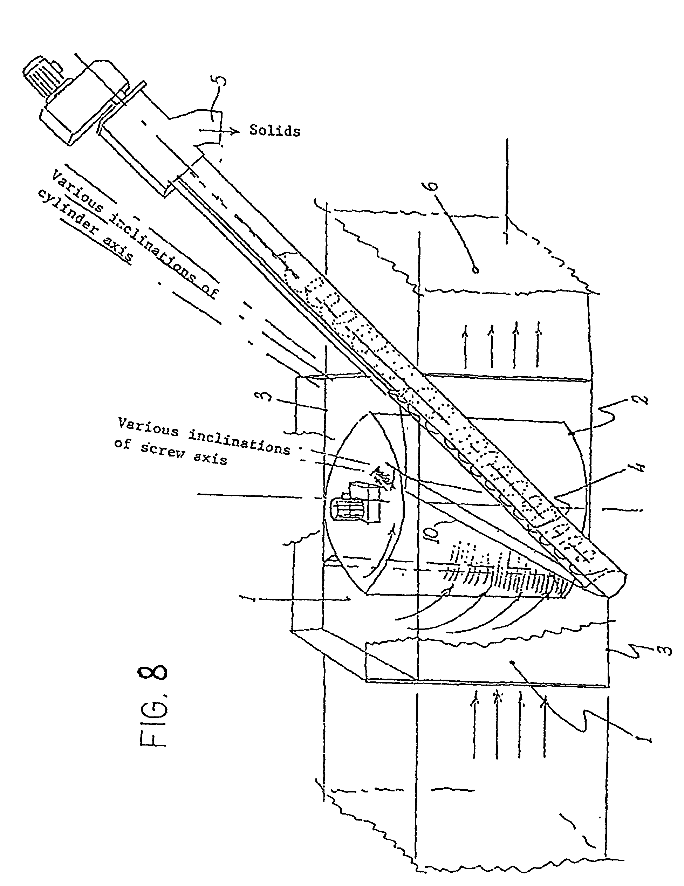

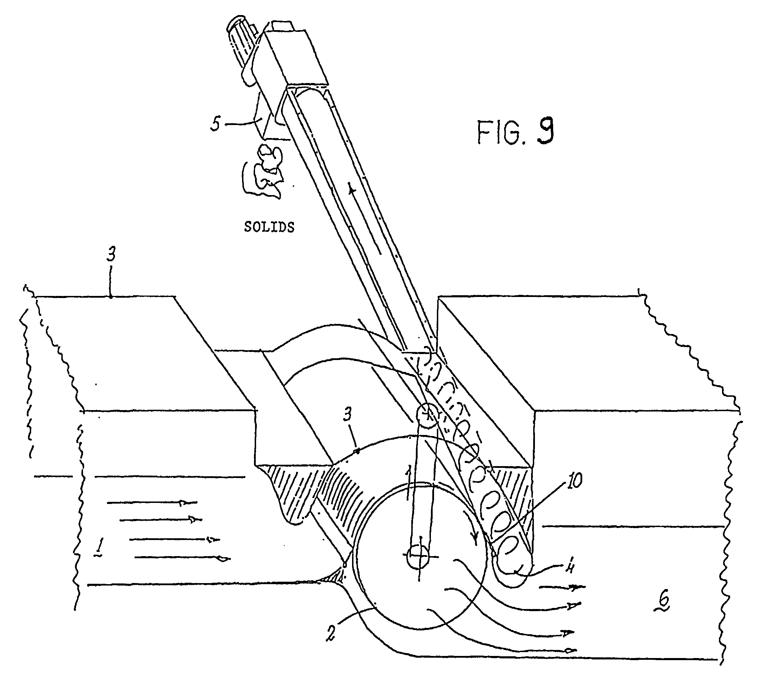

Finally in figures 8 and 9 it can be seen how the apparatus of the invention can be used directly in a channel, arranged either horizontally or vertically.

If vertically arranged, the inclination of the screw 4 or other device, for compacting and extracting the solids, can be varied at will, as schematically shown in figure 8.

The lower side of the screw 4 is pierced to afford optimal drainage.

The schematic representation in figure 9 shows very clearly the characteristics and advantages of the present invention. Functioning is extremely simple and compaction and extraction of the solids obtained extremely advantageous.

The apparatus of the invention, independently of its embodiment, can work at flow rates of between 0.5 and 1,000 m³ per hour, according to the type of destination of use of the invention.

Working pressure can vary between 0.1 and 100 bar more than atmospheric pressure, preferably up to 30-50 bar.

The revolving screen can have filter preforations of between 0.1 and 2.5 mm, with helical or longitudinal wire winding, or it can be made of perforated sheet steel.

Flow resistance of the apparatus depends on the flow rate and the length of the revolving screen 2 or cylinder.

Each type of screen 2 can be provided with a nozzle 7, having a pressure varying between 1 and 200 bar.

Further, as has already been mentioned, the revolving screen 2 can be driven by an electric motor or a hydrodynamic turbine.

The screw 4 and the revolving screen 2 motor can be equipped with gear reducers if so desired.

The container 3 and the revolving screen 2 can be made of cast iron, carbon steel, stainless steel, plastic, aluminium or other metal alloys.

## Claims

1. An apparatus for screening and compacting a liquid-solid mixture, comprising:
a closed container (3);
a revolving screening cylinder (2) contained internally of the container (3);
an inlet (1) for the mixture coupled to said container (3) and in communication with the outside of the cylinder (2);
means for introducing the mixture through said inlet (1) internally of said container (3) at a higher than atmospheric pressure; an outlet (6) of the screened liquid coupled to said container (3);
means, located externally of the cylinder (2), for extracting the solids and/or sludge separated from the liquid and compacted by effect of said pressure;
wherein the outlet (6) of the screened liquid is in communication with the outside of the cylinder (2).

2. The apparatus of claim 1, **characterised in that** the inlet (1) for the mixture is located at a higher level than the outlet (6) of the screened liquid which is preferably located at the bottom of the container (3).

3. The apparatus of claim 1 or 2, **characterised in that** the inlet of the liquid-solid mixture is subdivided into a plurality of conduits (1'), so as to have an optimal distribution of the mixture over the revolving screen (2).

4. The apparatus of any one of the preceding claims, **characterised in that** said means for extracting can be provided with an outlet valve which opens automatically in accordance with a pushing action of the compacted solids and/or sludge.

5. The apparatus of any one of the preceding claims, **characterised in that** said means for extracting the compacted solids and/or sludge are constituted by an endless screw or a conveyor belt.

6. The apparatus of any one of the preceding claims, **characterised in that** blades are provided for cleaning the revolving screen.

7. The apparatus of any one of the preceding claims, **characterised in that** said revolving screen is offset with respect to the container.

8. The apparatus of any one of the preceding claims, **characterised in that** a channel is provided between the inlet of the mixture and the outlet of the solids and/or sludge.

9. The apparatus of any one of the preceding claims, **characterised in that** a system is provided for pressurising the container with compressed air and a sensor is provided for reading the level of the liquid internally of the container.

## Patentansprüche

1. Vorrichtung zum Sieben und Kompaktieren einer Flüssigkeits-Festkörper-Mischung, enthaltend:
- einen geschlossenen Behälter (3);
- eine rotierende Siebtrommel (2), gelagert im Inneren des Behälters (3);
- einen Einlass (1) für die Mischung, verbunden mit dem genannten Behälter (3) und mit dem Aussenbereich der Trommel (2) in Verbindung stehend;
- Mittel zum Eingeben der Mischung durch den genannten Einlass (1) in das Innere des genannten Behälters (3) mit einem höheren als dem atmosphärischen Druck;
- einen Auslass (6) für die gesiebte Flüssigkeit, verbunden mit dem genannten Behälter (3);
- im Aussenbereich der Trommel (2) angeordnete Mittel zum Abziehen der von der Flüssigkeit getrennten und durch die Wirkung des genannten Druckes kompaktierten Festkörper und/oder des Schlammes;
bei welcher der Auslass (6) der gesiebten Flüssigkeit mit dem Aussenbereich der Trommel (2) in Verbindung steht.

2. Vorrichtung nach Patentanspruch 1, **dadurch gekennzeichnet, dass** der Einlass (1) für die Mischung auf einer höheren Ebene angeordnet ist als der Auslass (6) für die gesiebte Flüssigkeit, welcher sich vorzugsweise am Boden des Behälters (3) befindet.

3. Vorrichtung nach Patentanspruch 1 oder 2, **dadurch gekennzeichnet, dass** der Einlass für die Flüssigkeits-Festkörper-Mischung in eine Anzahl von Leitungen (1') unterteilt ist, so dass eine optimale Verteilung der Mischung über die rotierende Trommel (2) erhalten wird.

4. Vorrichtung nach einem beliebigen der vorstehenden Patentansprüche, **dadurch gekennzeichnet, dass** die genannten Mittel zum Abziehen mit einem Ablassventil versehen sein können, welches sich übereinstimmend mit einer Schubwirkung der kompaktierten Festkörper und/oder des Schlammes automatisch öffnet.

5. Vorrichtung nach einem beliebigen der vorstehenden Patentansprüche, **dadurch gekennzeichnet, dass** die genannten Mittel zum Abziehen der kompaktierten Festkörper und/oder des Schlammes aus einer Endlosschnecke oder aus einem Förderband bestehen.

6. Vorrichtung nach einem beliebigen der vorstehenden Patentansprüche, **dadurch gekennzeichnet, dass** Messer zum Reinigen der rotierenden Siebtrommel vorgesehen sind.

7. Vorrichtung nach einem beliebigen der vorstehenden Patentansprüche, **dadurch gekennzeichnet, dass** die genannte rotierende Siebtrommel im Verhältnis zu dem Behälter versetzt ist.

8. Vorrichtung nach einem Beliebigen der vorstehenden Patentansprüche, **dadurch gekennzeichnet, dass** ein Kanal zwischen dem Einlass für die Mischung und dem Auslass für die Festkörper und/oder des Schlammes vorgesehen ist.

9. Vorrichtung nach einem Beliebigen der vorstehenden Patentansprüche, **dadurch gekennzeichnet, dass** ein System vorgesehen ist, um den Behälter mit Druckluft unter Druck zu setzen, sowie ein Fühler zum Ablesen des Flüssigkeitsstandes im Inneren des Behälters.

## Revendications

1. Un appareil pour le criblage et le compactage d'une mixture liquide-solide, comprenant:
- un conteneur clos (3);
- un cylindre rotatif de criblage (2) contenu dans le conteneur (3);
- une entrée (1) pour la mixture, accouplée audit conteneur (3) et en communication avec l'extérieur du cylindre (2);
- des moyens pour introduire la mixture, au travers de ladite entrée (1), à l'intérieur dudit conteneur (3) à une pression supérieure à la pression atmosphérique;
- une sortie (6) du liquide criblé accouplée audit conteneur (3);
- des moyens, disposés à l'extérieur du cylindre (2), pour extraire les solides et/ou les boues séparés du liquide et compactés sous l'effet de ladite pression;
dans lequel la sortie (6) du liquide criblé est en communication avec l'extérieur du cylindre (2).

2. L'appareil de la revendication 1, **caractérisé en ce que** l'entrée (1) de la mixture est située à un niveau supérieur à celui de la sortie (6) du liquide criblé, cette dernière étant préférablement située à la base du conteneur (3).

3. L'appareil de la revendication 1 ou 2, **caractérisé en ce que** l'entrée de la mixture solide-liquide est subdivisée en une pluralité de conduits (1'), de manière à présenter une distribution optimum de la mixture sur tout l'écran rotatif (2).

4. L'appareil de n'importe laquelle des revendications précédentes, **caractérisé en ce que** lesdits moyens d'extraction peuvent être pourvus d'une valve de sortie qui s'ouvre automatiquement en correspondance d'une force de poussée des solides et/ou boues compactés.

5. L'appareil de n'importe laquelle des revendications précédentes, **caractérisé en ce que** les moyens d'extraction des solides et/ou boues compactés sont constitués d'une vis sans fin ou d'un convoyeur à tapis roulant.

6. L'appareil de n'importe laquelle des revendications précédentes, **caractérisé en ce que** sont prévues des lames pour nettoyer l'écran rotatif (2).

7. L'appareil de n'importe laquelle des revendications précédentes, **caractérisé en ce que** ledit écran rotatif (2) est décalé par rapport au conteneur.

8. L'appareil de n'importe laquelle des revendications précédentes, **caractérisé en ce qu'**un canal est prévu entre l'entrée de la mixture et la sortie des solides et/ou boues.

9. L'appareil de n'importe laquelle des revendications précédentes, **caractérisé en ce que** sont prévus un système pour pressuriser le conteneur avec de l'air comprimé et un capteur pour détecter le niveau du, liquide à l'intérieur du conteneur.
